# FASCICULE DE BREVET EUROPEEN

(11) **EP 2 998 787 B1**
(45) Date de publication et mention de la délivrance du brevet: **29.08.2018**
(21) Numéro de dépôt: 15020083.0
(22) Date de dépôt: 02.06.2015
(51) Int. Cl.: G03B 13/16, G03B 15/14, G01B 11/14

(54) **DISPOSITIF ET PROCÉDÉ SANS CONTACT POUR STANDARDISER LA PRISE DE PHOTOGRAPHIES**
BERÜHRUNGSLOSE VORRICHTUNG UND VERFAHREN ZUR STANDARDISIERUNG DER AUFNAHME VON PHOTOGRAPHIEN
CONTACTLESS DEVICE AND METHOD FOR STANDARD PHOTO-TAKING

(30) Priorité: 17.06.2014 FR 1401365
(43) Date de publication de la demande: 23.03.2016
(73) Titulaire: QuantifiCare S.A., 06560 Valbonne (FR)
(72) Inventeur: THIRION, Jean-Philippe, 06560 Valbonne (FR)
(74) Mandataire: Decobert, Jean-Pascal

(56) Documents cités:
- EP-A1- 2 136 248
- WO-A1-90/09560
- FR-A1- 2 796 472
- FR-A1- 2 866 129
- US-A- 5 289 220
- US-B1- 6 340 114

## Description

La présente invention concerne le domaine de la standardisation des prises de vues photographiques. Dans de nombreux cas, un opérateur aura du mal à prendre une photographie de qualité qui soit à la fois centrée, cadrée et parfaitement nette du sujet. Souvent également, plus l'appareil photographique est performant et sophistiqué et plus il est difficile d'assurer une standardisation de la prise de vue à cause de la multiplicité des options de réglage.

Des dispositifs ont été mis au point afin de contraindre la prise de vue pour certaines applications, comme par exemple dans le cas des photographies médicales. Il a été proposé d'utiliser un cadre rigide sur ou dans lequel le sujet repose une partie anatomique, par exemple le visage. Un appareil photographique est fixé sur le cadre rigide et est réglé afin que sa distance de mise au point corresponde à la position attendue du centre du sujet examiné. Cette approche a notamment été utilisée dans le cas des boites à images, sortes de demi-sphères contenant un appareil photographique fixe et dans laquelle le sujet insère sa tête. Un inconvénient majeur d'un tel dispositif est la nécessité d'un contact physique entre le cadre rigide de repositionnement et le sujet ce qui peut s'avérer problématique dans le cas d'une application médicale lorsque l'on cherche par exemple à obtenir des photographies de plaies ou de brulures tout en évitant le risque d'infection. Un autre inconvénient est que le cadre est visible sur l'image et peut également cacher certaines parties du sujet. Enfin, un tel cadre peut se révéler très encombrant et difficile à déplacer.

Une autre manière d'assurer une reproductibilité dans la distance de prise de vue consiste à fixer une tige rigide à l'appareil photographique et à régler la distance de mise au point de l'appareil pour que celle-ci corresponde à la distance de la tige. Ainsi, en venant mettre en contact l'extrémité de la tige avec le sujet et en positionnant le point de contact avec le centre du sujet, on peut assurer une reproductibilité de la prise de vue. Bien que plus transportable qu'un cadre rigide de repositionnement, les inconvénients demeurent concernant le contact avec le sujet et la présence de l'extrémité de la tige dans l'image, qui peut cacher une partie du sujet.

Une autre manière encore d'assurer une reproductibilité dans la distance de prise de vue consiste à utiliser des pointeurs lumineux qui convergent à la distance de mise au point de l'appareil d'acquisition dans le but de mesurer une distance ou bien encore de piloter la mise au point automatique d'une optique adaptative.

Un exemple d'optique adaptative utilisant des pointeurs lumineux est présenté dans le brevet Allemand EP 2 136 248 A1, SICK AG [DE], 23 décembre 2009 (2009-12-23) alinéas [0038] - [0053] figures 1-3. Le but du dispositif est de piloter la mise au point d'un appareil photographique dédié afin de focaliser l'appareil à une distance donné. Il ne s'agit pas d'un accessoire photographique autonome s'adaptant sur un appareil photographique standard, et il ne s'agit pas de bloquer la mise au point de son optique à une distance donnée mais au contraire il s'agit d'un système de pilotage d'une optique dont la mise au point s'adapte.

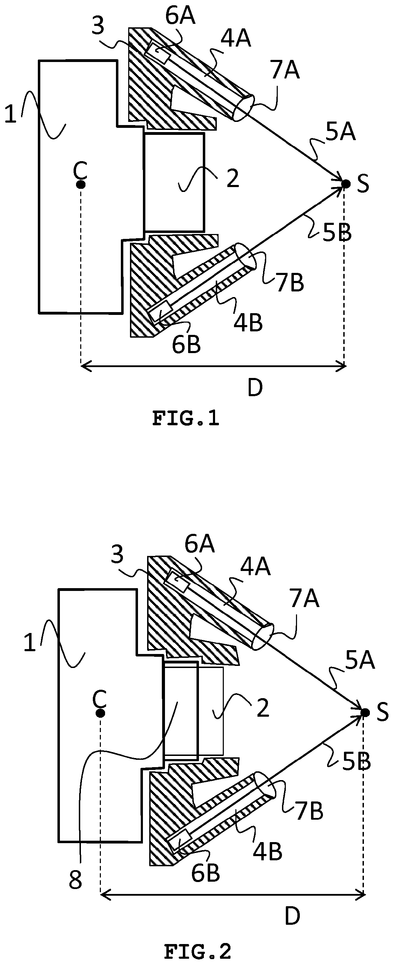

Le brevet International PCT WO 90/09560 A1, John Lysaght Limited [AU], du 23 août 1990 (1990-08-23), page 2, ligne 26 et page 3 ligne 2, Figure 2 présente un système utilisant des pointeurs lumineux dont le but est de mesurer des distances entre objets et plus particulièrement de mesurer des différences de distance relative entre objets ou parties d'un objet en analysant la position relative des points lumineux sur les objets examinés. Il ne s'agit pas dans cet invention de piloter une distance de mise au point ni de bloquer une distance de mise au point mais de mesurer une distance.

Le brevet Américain US 6340114 B1 (Correa Mark [US] et al), du 22 janvier 2002 (2002-01-22) décrit un système de lecture de code barre disposant d'un système de projection d'un pattern lumineux constitué de deux rectangles concentriques permettant de s'assurer que le code barre à analyser se situe entre une distance minimale et une distance maximale du lecteur, ceci se faisant en ajustant la distance de telle sorte que le rectangle du code barre soit inclus entre les deux rectangles projetés. Il est à noter que dans ce cas, le dispositif concerne une caméra vidéo et non un appareil photographique. Il faut noter également que la superposition de faisceaux n'est pas réalisée puisqu'il s'agit ici d'un projecteur unique. Ce dispositif illustre un parmi de nombreux dispositifs dédiés disposant d'un projecteur de patterns lumineux et permettant d'ajuster ou d'encadrer un objet visé. Un tel dispositif ne constitue pas un accessoire photographique autonome s'adaptant sur un appareil photographique standard, et il ne sert pas non plus à bloquer la distance de mise au point de son optique à une distance donnée.

Il faut noter également que pour l'ensemble des dispositifs comportant des pointeurs lumineux que nous venons de décrire, aucun ne s'attache à décrire un mécanisme de désactivation des pointeurs lumineux lors de la prise de vue. En effet, dans la plupart des cas, la lumière d'un flash est suffisamment puissante pour que la présence de ces pointeurs lumineux soit visuellement pratiquement indétectable. En pratique, il n'y a que dans le domaine de l'analyse d'images médicales, que nous visons principalement dans la présente invention, qu'il est avantageux de veiller à ne pas biaiser l'image par des lumières parasites comme celles créées par des pointeurs lumineux. En effet, les algorithmes de traitement d'images médicales ont généralement la sensibilité nécessaire pour percevoir ces lumières parasites et dans ce domaine d'application tout risque de biais dans les mesures doit être évité.

Les systèmes utilisant des pointeurs lumineux décrits précédemment concernent des caméras vidéo ou des appareils photographiques dédiés à des fins de mesure industrielle pour lesquels le fait d'éteindre les pointeurs lumineux pendant la prise de vue n'a pas l'importance nécessaire à la mise au point d'un dispositif d'extinction spécifique. Au contraire, pour ces dispositifs, il est important de maintenir les pointeurs actifs pendant la prise de vue, afin d'assurer la focalisation de l'optique adaptative, d'effectuer la mesure de distance ou encore de cadrer le code barre pendant la durée de lecture par la caméra vidéo.

Ces systèmes ne sont pas adaptables à des appareils photographiques standards existants mais constituent des systèmes intégrés bâtis sur mesure pour leur application industrielle. Ces systèmes intégrés ne sont donc pas des accessoires photographiques. Ils n'ont pas pour fonction de bloquer la distance de mise au point d'un appareil photographique standard afin de le rendre utilisable, en combinaison avec un jeu de pointeurs lumineux, pour des prises de vue standardisées.

Le dispositif selon l'invention permet de remédier à ces inconvénients en évitant le contact physique et la présence d'objets de repositionnement dans la photographie tout en assurant la reproductibilité de la prise de vue. Le dispositif selon l'invention s'adapte à un appareil photographique standard. Le dispositif est muni de deux pointeurs lumineux qui convergent à une distance fixe incluse dans le champ de mise au point de l'appareil. En positionnant l'appareil à une distance du sujet qui superpose les taches lumineuses des deux pointeurs on s'assure de la netteté de la photographie et en centrant la tache lumineuse au centre du sujet examiné on s'assure du cadrage de l'appareil. Le dispositif permet d'éteindre les pointeurs lumineux pendant la prise de vue afin que la lumière des pointeurs lumineux ne biaise pas l'image acquise.

Dans une variante de réalisation, il comporte un boitier qui permet de restreindre l'accès à la fonction de mise au point de l'appareil photographique. Le fait que le boitier restreint l'accès à la fonction de mise au point de l'appareil photographique empêche l'utilisateur de dérégler accidentellement la mise au point une fois celle-ci réglée à la distance de convergence des pointeurs lumineux. Les pointeurs lumineux s'entendent au sens large car il peut s'agir de sources lumineuses focalisées par des lentilles, de LEDs, de lasers ou de tout autre dispositif d'éclairage. La tache lumineuse produite par chacun des pointeurs peut être de forme variée telle qu'un cercle, un disque, une croix, sans changer la nature de l'invention.

Selon des modes particuliers de réalisation :
- La bague de mise au point de l'objectif une fois réglée à la distance des pointeurs lumineux est bloquée de manière temporaire ou définitive, par exemple au moyen de colle, d'une visse ou d'une bande adhésive.
- Le boitier couvre également la fonction de zoom de l'objectif de l'appareil photographique. Tout comme pour la bague de mise au point de l'objectif, la bague de zoom est bloquée de manière temporaire ou définitive afin d'assurer un champ de prise de vue reproductible.
- Les pointeurs lumineux sont alimentés au travers de la bague de fixation des objectifs.
- Le boitier est muni d'un détecteur de lumière permettant de détecter l'activation du flash et d'interrompre le fonctionnement des pointeurs lumineux pendant la durée du flash.
- Un signal électrique est capté au travers de la bague de fixation des objectifs ou encore à travers le sabot du flash afin de détecter la prise de vue photographique et d'éteindre les pointeurs lumineux pendant la prise de vue.
- Un bouton poussoir permet d'activer les pointeurs lumineux.
- Un bouton poussoir à deux états permet par une pression légère de mettre en marche les pointeurs lumineux et par une pression plus forte de déclencher la prise de vue et l'arrêt des pointeurs lumineux pendant la prise de vue.
- Le bouton pression à deux états qui sert à la mise au point et au déclanchement de l'appareil photographique est lui-même utilisé pour l'allumage des pointeurs lumineux et leur extinction pendant la prise de vue.

Un avantage important de la présente invention, lorsqu'elle est utilisée avec une fixation temporaire de la bague de mise au point et de la bague de zoom est de permettre par démontage du boitier, re-réglage du zoom et de la mise au point et remontage du boitier, d'adapter l'appareil photographique à un champ de vision en adéquation avec une nouvelle application.

Les dessins annexés illustrent l'invention :
- La figure 1 représente en coupe le dispositif de l'invention placé sur un appareil photographique.
- La figure 2 représente en coupe une variante de l'invention dans laquelle le boitier couvre également la fonction de zoom de l'appareil photographique.
- La figure 3 représente en coupe une variante de l'invention où les pointeurs lumineux sont alimentés au travers de la bague de fixation des objectifs.
- La figure 4 représente en coupe une variante de l'invention dans laquelle un bouton poussoir à deux états règle l'allumage et l'extinction des pointeurs lumineux et également le déclanchement de la prise de vue.
- La figure 5 présente un procédé pour prendre des photographies de façon reproductible dans lequel un accessoire supportant des pointeurs lumineux est fixé à un appareil photographique et utilisé pour définir la distance et centrer le champ de la caméra et où la lumière des pointeurs lumineux est éteinte lorsque la prise de vue est réalisée.

En référence à ces dessins, le dispositif se fixe sur un appareil photographique (1) de centre optique (C) muni d'un objectif (2) et est constitué d'un boitier (3) comprenant au moins deux pointeurs lumineux (4A) et (4B) dont les faisceaux (5A) et (5B) convergent au point (S). La distance de mise au point de l'objectif (2) est réglée, par l'utilisation de l'autofocus ou par préréglage, de sorte qu'elle soit égale à la distance (D) séparant le centre optique (C) de l'appareil photographique (1) et le point de convergence (S) des faisceaux lumineux (5A) et (5B).

Dans la forme de réalisation suivant la figure 1, le pointeur lumineux (4A) est constitué d'un tube formé directement à partir du boitier (3), d'une lentille (7A) et d'une source lumineuse (6A) et le pointeur lumineux (4B) est constitué d'un tube formé directement à partir du boitier (3), d'une lentille (7B) et d'une source lumineuse (6B) .

Dans d'autres variantes de réalisation non illustrées, les pointeurs lumineux sont constitués d'un assemblage de plusieurs lentilles, de LEDs ou de lasers afin d'assurer une plus grande cohérence des rayons lumineux. La tache lumineuse créée par chaque pointeur lumineux peut avoir des formes variées, comme un cercle, un disque, une croix ou tout autre motif.

Selon une variante non illustrée du dispositif, l'objectif est réglé en mode manuel pour la mise au point et une fois réglé, la bague de focalisation de l'objectif est bloquée pour éviter tout dérèglement. Plusieurs moyens de blocages de l'optique sont possibles avant la mise en place du boitier (3) sur l'objectif (2) comme l'utilisation de colle, de visses ou de bandes adhésives.

Dans la forme de réalisation de la figure 2, l'objectif (2) est muni d'un zoom (8) et le boitier (3) est adapté de telle sorte qu'il restreigne à la fois l'accès à la bague du zoom (8) et à la bague de mise au point de l'objectif (2).

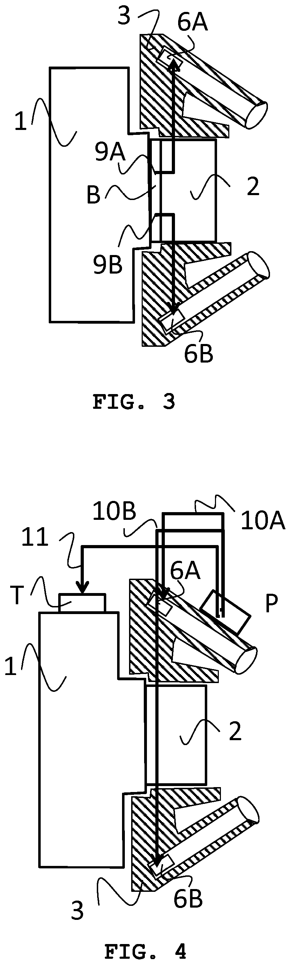

Dans la forme de réalisation de la figure 3, l'alimentation des pointeurs lumineux se fait par l'intermédiaire d'un ensemble de câbles électriques (9A) et (9B) alimentés directement à partir de l'appareil photographique. Une manière de réaliser cette alimentation consiste à utiliser les sorties électriques que possèdent de nombreux modèles d'appareils photographiques, notamment reflex, au niveau de la bague de fixation des objectifs. Une façon d'utiliser ces sorties électriques est d'introduire une bague intermédiaire (B) qui recueille cette source d'alimentation pour la transmettre aux pointeurs lumineux par l'intermédiaire des câbles électriques (9A) et (9B). La bague intermédiaire (B) permet de recueillir non seulement l'alimentation électrique, mais également divers signaux émis par l'appareil photographique comme le signal de mise au point quand l'utilisateur exerce une pression légère sur le déclencheur de l'appareil ou comme le signal de prise de vue lorsque l'utilisateur pousse complètement le déclencheur. Des signaux similaires peuvent être obtenus à partir du sabot du flash de l'appareil photographique ou par d'autres moyens encore en fonction des modèles. Le décodage de ces signaux peut être fait au moyen d'une puce électronique placée dans le boitier (3) ou dans la bague intermédiaire (B) et commander l'allumage ou l'extinction des pointeurs lumineux au travers de signaux transmis aux sources lumineuses (6A) et (6B). La transmission des signaux s'entend au sens large et peut être réalisée par l'envoi d'ondes électromagnétiques ou par un signal électrique transitant au travers des câbles (9A) et (9B). Ainsi, dans cette variante, l'allumage de l'appareil ou l'activation du signal de mise au point entraine l'allumage des pointeurs lumineux et le déclanchement de l'appareil photographique engendre l'extinction simultanée des pointeurs lumineux pendant la durée de prise de vue, ce qui permet d'éviter de voir apparaitre la tache lumineuse dans l'image acquise.

Dans la forme de réalisation de la figure 4, le boitier (3) est muni d'un bouton poussoir (P) qui permet l'allumage des pointeurs lumineux au moyen de deux signaux (10A) et (10B). Les signaux (10A) et (10B) sont à comprendre au sens large et peuvent être des signaux électromagnétiques, des signaux électriques véhiculés par des câbles métalliques ou tout autre signal permettant de déclencher l'allumage des pointeurs lumineux. Ainsi, par une pression du doigt, l'utilisateur peut mettre en route ou suspendre le fonctionnement des pointeurs lumineux. Dans ce mode de réalisation, les pointeurs lumineux peuvent être alimentés par une pile électrique placée dans le boitier (3), par un câble électrique non illustré sur la figure en provenance de l'appareil photographique (1) ou au moyen de la bague intermédiaire (B). Toujours suivant la figure 4, une variante de réalisation existe dans le cas où l'appareil photographique (1) dispose d'une fonctionnalité externe de déclanchement (T). Dans ce cas, la variante consiste à faire usage d'un bouton poussoir (P) à deux états, le premier état permet la mise en route des pointeurs lumineux au travers des signaux (10A) et (10B) et un second état permet de couper les pointeurs lumineux, toujours au travers des signaux (10A) et (10B) et de déclencher simultanément la prise de vue photographique au moyen d'un signal (11) relié au dispositif de déclanchement (T) de l'appareil. Le signal (11) se comprend également sens large et peut être de façon non exhaustive une onde électromagnétique, un signal électrique véhiculé au moyen d'un câble électrique ou tout autre type de signal.

Bien évidemment, d'autres combinaisons pour l'allumage, l'extinction et l'alimentation des pointeurs lumineux sont possibles en associant les variantes de réalisation des figures (3) et (4). La synchronisation de l'extinction des pointeurs lumineux et de la prise de vue pourra se faire également au travers d'un capteur photosensible détectant le flash de l'appareil photographique si ce dernier est utilisé.

Dans une forme de réalisation non illustrée par une figure, le dispositif est équipé de plus de deux pointeurs lumineux dans le but de définir différentes distances compatibles avec la distance de mise au point de l'appareil photographique. L'autofocus de l'appareil est utilisé de tel sorte que plusieurs distances standards peuvent être réalisées. A titre d'exemple, il est ainsi possible d'utiliser deux paires de pointeurs se croisant à deux distances différentes, une proche, une lointaine et permettre ainsi la prise de vue standardisée de clichés proches et lointains.

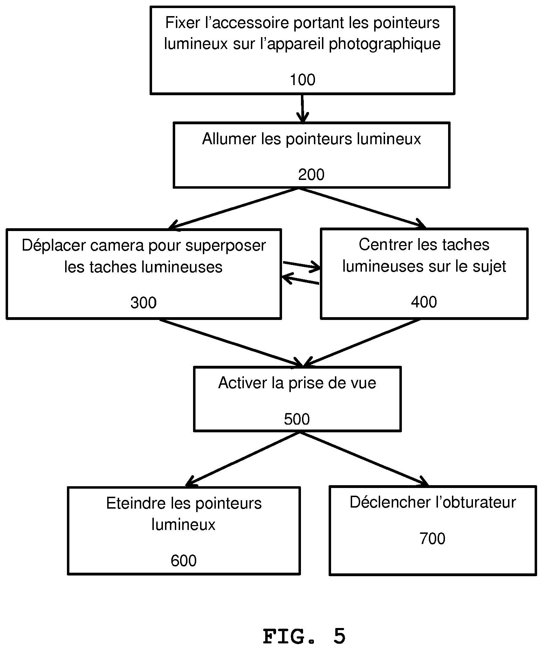

L'invention concerne également un procédé pour prendre des prises de vues de façon reproductible dont une forme de réalisation est illustrée par la figure 5 et selon lequel, dans un premier temps, un accessoire portant au moins deux pointeurs lumineux est fixé à un appareil photographique (100), puis la lumière des pointeurs lumineux est activée (200), l'utilisateur définit alternativement la distance au sujet en superposant les deux taches lumineuses des pointeurs sur le sujet (300) et centre les taches lumineuses sur le sujet (400), puis l'utilisateur initie la prise de vue (500) et enfin et simultanément la lumière des pointeurs lumineux est éteinte (600) et la photographie est prise (700).

Le dispositif suivant l'invention est particulièrement destiné à standardiser les prises de vues photographiques.

## Revendications

1. Dispositif pour standardiser les prises de vues photographiques adaptable sur un appareil photographique (1) muni d'un objectif (2) comprenant au moins deux pointeurs lumineux (4A) et (4B) dont les faisceaux lumineux (5A) et (5B) convergent en un point (S) de telle sorte que la distance (D) séparant le centre optique (C) de l'appareil photographique (1) du point de convergence (S) des faisceaux lumineux (5A) et (5B) est incluse dans le champ de distance de mise au point de l'appareil photographique (1) et **caractérisé par le fait que** le dispositif est équipé d'un système (P) permettant la synchronisation automatique de l'extinction des pointeurs lumineux (4A) et (4B) pendant la durée de prise de vue de l'appareil photographique (1), de sorte que les pointeurs lumineux soient maintenus actifs avant le déclenchement de l'appareil photographique (1), puis que les pointeurs lumineux (4A) et (4B) s'éteignent au moment du déclenchement et soient maintenus éteints pendant toute la durée de l'impression de la surface photosensible de l'appareil photographique (1) et qu'enfin les pointeurs lumineux (4A) et (4B) se rallument à la fin de l'impression de la surface photosensible de l'appareil photographique (1).

2. Dispositif selon la revendication 1 **caractérisé par le fait que** le boitier (3) est apte à couvrir la fonctionnalité de mise au point de l'objectif (2).

3. Dispositif selon les revendications 1 à 2 et **caractérisé par le fait que** le boitier (3) et apte à couvrir également la fonctionnalité de zoom (8) de l'objectif (2) de l'appareil photographique (1).

4. Dispositif selon les revendications 1 à 3 et **caractérisé par le fait que** les pointeurs lumineux (4A) et (4B) sont alimentés par une bague de fixation intermédiaire (B) positionnée entre l'appareil photographique (1) et l'objectif (2) ou bien encore par le sabot du flash de l'appareil photographique (1) et relié par des câbles électriques (9A) et (9B) aux sources lumineuses (6A) et (6B) des pointeurs (4A) et (4B).

5. Dispositif selon les revendications 1 à 4 et **caractérisé par le fait que** l'extinction des pointeurs lumineux (4A) et (4B) lors de la prise de vue se fait au travers de l'analyse d'un signal reçu de la bague intermédiaire (B) placée entre l'appareil photographique (1) et l'objectif (2) ou reçu du sabot du flash de l'appareil photographique (1) et transmis aux sources lumineuses (6A) et (6B) des pointeurs lumineux (4A) et (4B).

6. Dispositif suivant les revendications 1 à 5 et **caractérisé par le fait qu'**un bouton poussoir (P) permet d'activer les pointeurs lumineux (4A) et (4B) au travers des signaux (10A) et (10B).

7. Dispositif suivant la revendication 1 à 6 et **caractérisé par** le fait de disposer d'un bouton poussoir (P) à deux états, tel qu'un premier niveau de pression active les pointeurs lumineux (4A) et (4B) et tel qu'une pression plus forte sur (P) entraine l'extinction des pointeurs lumineux (4A) et (4B) et la prise simultanée de la photographie par l'appareil photographique (1).

8. Dispositif suivant la revendication 7 et **caractérisé par le fait que** le bouton poussoir à deux états (P) utilisé est le bouton de déclenchement de l'appareil photographique lui-même.

9. Dispositif suivant les revendications 1 à 8 et **caractérisé par le fait qu'**une cellule photosensible déclenchée par l'activation du flash de l'appareil photographique (1) est utilisée pour commander l'extinction des pointeurs lumineux (4A) et (4B) pendant la durée de prise de vue.

10. Dispositif suivant les revendications 1 à 9 et **caractérisé par le fait que** le corps du dispositif est muni de plus de deux pointeurs lumineux dans le but d'acquérir des images à des distances fixes multiples.

11. Procédé d'utilisation du dispositif selon les revendications 1 à 10 pour rendre reproductible les prises de vues photographiques et **caractérisé en ce que** :
- un accessoire supportant au moins deux pointeurs lumineux est fixé à un appareil photographique (100) puis,
- la lumière des pointeurs est activée (200) puis,
- l'utilisateur définit alternativement la distance au sujet en superposant les taches lumineuses des pointeurs (300) et le centrage des taches lumineuses sur le sujet (400) puis,
- l'utilisateur active la prise de vue (500) et enfin,
- un système d'extinction automatique des pointeurs lumineux se déclenche (600) au moment où l'utilisateur active la prise de vue (700) de sorte que les pointeurs lumineux soient maintenus actifs avant le déclenchement de l'appareil photographique, puis que les pointeurs lumineux s'éteignent au moment du déclenchement et soient maintenus éteints pendant toute la durée de l'impression de la surface photosensible de l'appareil photographique et qu'enfin les pointeurs lumineux se rallument à la fin de l'impression de la surface photosensible de l'appareil photographique.

## Patentansprüche

1. Vorrichtung, um die Fotoaufnahmen zu standardisieren, welche auf einen mit einem Objektiv (2) ausgestatteten Fotoapparat (1) anpassbar ist, umfassend mindestens zwei Lichtzeiger (4A) und (4B), deren Lichtstrahlen (5A) und (5B) derart in einem Punkt (S) konvergieren, dass die Distanz (D), die das optische Zentrum (C) des Fotoapparats (1) vom Konvergenzpunkt (S) der Lichtstrahlen (5A) und (5B) trennt, im Fokussierungsdistanzfeld des Fotoapparats (1) eingeschlossen ist, und **dadurch gekennzeichnet, dass** die Vorrichtung mit einem System (P) ausgerüstet ist, welches die automatische Synchronisierung des Ausschaltens der Lichtzeiger (4A) und (4B) während der Aufnahmedauer des Fotoapparats (1) so ermöglicht, dass die Lichtzeiger vor dem Auslösen des Fotoapparats (1) aktiv gehalten werden, dass anschließend die Lichtzeiger (4A) und (4B) sich im Moment des Auslösens ausschalten und während der gesamten Dauer des Belichtens der lichtempfindlichen Fläche des Fotoapparats (1) ausgeschaltet gehalten werden, und dass schließlich die Lichtzeiger (4A) und (4B) sich am Ende des Belichtens der lichtempfindlichen Fläche des Fotoapparats (1) wieder einschalten.

2. Vorrichtung nach Anspruch 1, **dadurch gekennzeichnet, dass** das Gehäuse (3) in der Lage ist, die Fokussierungsfunktionalität des Objektivs (2) abzudecken.

3. Vorrichtung nach den Ansprüchen 1 bis 2 und **dadurch gekennzeichnet, dass** das Gehäuse (3) in der Lage ist, ebenfalls die Zoom-Funktionalität (8) des Objektivs (2) des Fotoapparats (1) abzudecken.

4. Vorrichtung nach den Ansprüchen 1 bis 3 und **dadurch gekennzeichnet, dass** die Lichtzeiger (4A) und (4B) über einen Zwischenfixierring (B), der zwischen dem Fotoapparat (1) und dem Objektiv (2) positioniert ist, oder aber auch über den Schuh des Blitzes des Fotoapparats (1), und über elektrische Kabel (9A) und (9B) mit den Lichtquellen (6A) und (6B) der Zeiger (4A) und (4B) verbunden, gespeist werden.

5. Vorrichtung nach den Ansprüchen 1 bis 4 und **dadurch gekennzeichnet, dass** das Ausschalten der Lichtzeiger (4A) und (4B) bei der Aufnahme über die Analyse eines Signals erfolgt, das von dem zwischen dem Fotoapparat (1) und dem Objektiv (2) platzierten Zwischenring (B) empfangen wird, oder das vom Schuh des Blitzes des Fotoapparats (1) empfangen wird, und an die Lichtquellen (6A) und (6B) der Lichtzeiger (4A) und (4B) übertragen wird.

6. Vorrichtung nach den Ansprüchen 1 bis 5 und **dadurch gekennzeichnet, dass** ein Druckknopf (P) ermöglicht, die Lichtzeiger (4A) und (4B) über die Signale (10A) und (10B) zu aktivieren.

7. Vorrichtung nach dem Anspruch 1 bis 6 und **dadurch gekennzeichnet, dass** sie über einen Druckknopf (P) mit zwei Zuständen verfügt, sodass ein erstes Druckniveau die Lichtzeiger (4A) und (4B) aktiviert, und sodass ein stärkerer Druck auf (P) das Ausschalten der Lichtzeiger (4A) und (4B) und die gleichzeitige Aufnahme des Fotos durch den Fotoapparat (1) bewirkt.

8. Vorrichtung nach Anspruch 7 und **dadurch gekennzeichnet, dass** der verwendete Druckknopf mit zwei Zuständen (P) der Auslöseknopf des Fotoapparats selbst ist.

9. Vorrichtung nach den Ansprüchen 1 bis 8 und **dadurch gekennzeichnet, dass** eine lichtempfindliche Zelle, die durch die Aktivierung des Blitzes des Fotoapparats (1) ausgelöst wird, verwendet wird, um das Ausschalten der Lichtzeiger (4A) und (4B) während der Dauer der Aufnahme zu steuern.

10. Vorrichtung nach den Ansprüchen 1 bis 9 und **dadurch gekennzeichnet, dass** der Körper der Vorrichtung mit mehr als zwei Lichtzeigern ausgestattet ist mit dem Ziel, Bilder auf mehreren festen Distanzen zu erfassen.

11. Verfahren zum Verwenden der Vorrichtung nach den Ansprüchen 1 bis 10, um die Fotoaufnahmen reproduzierbar zu machen, und **dadurch gekennzeichnet, dass**:
- ein Zubehör, das mindestens zwei Lichtzeiger trägt, an einem Fotoapparat befestigt wird (100), anschließend
- das Licht der Zeiger aktiviert wird (200), anschließend
- der Benutzer wechselweise die Distanz zum Subjekt definiert, indem er die Lichtflecken der Zeiger (300) und die Zentrierung der Lichtflecken auf dem Subjekt überlagert (400), anschließend
- der Benutzer die Aufnahme aktiviert (500), und schließlich
- ein System zum automatischen Ausschalten der Lichtzeiger sich in dem Moment auslöst (600), in dem der Benutzer die Aufnahme aktiviert (700), derart, dass die Lichtzeiger vor dem Auslösen des Fotoapparats aktiv gehalten werden, dass anschließend die Lichtzeiger sich im Moment des Auslösens ausschalten und während der gesamten Dauer des Belichtens der lichtempfindlichen Fläche des Fotoapparats ausgeschaltet gehalten werden, und dass schließlich die Lichtzeiger sich am Ende des Belichtens der lichtempfindlichen Fläche des Fotoapparats wieder einschalten.

## Claims

1. A device to standardize photography picture acquisition adapting to a camera (1) equipped with a lens (2) and comprising at least two light beamers (4A) and (4B) which light beams (5A) and (5B) are intersecting at a point position (S) so that the distance (D) between the center (C) of the lens of the camera (1) and the intersection point (S) of the light beams (5A) and (5B) is incorporated within the depth of field of the camera (1), wherein the device comprises a system (P) enabling to automatically extinguish the light beamers (4A) and (4B) during picture acquisition with the camera (1) so that the lights of the beamers are switched on prior to the triggering of the camera (1), the lights of the beamers (4A) and (4B) extinguish when the camera is triggered, the lights remain extinguished for the whole duration of image recording process by the photosensitive surface of the camera (1), and finally the lights of the beamers (4A) and (4B) are switched on again after the end of the image recording process by the photosensitive surface of the camera (1).

2. The device as defined in claim 1, **characterized in that** the case (3) enables the covering of the focus functionality of the lens (2).

3. The device as defined in any of the claims 1 to 2, **characterized in that** the case (3) enables the covering of the functionality of zoom (8) of the lens (2) of the camera (1).

4. The device as defined in any of the claims 1 to 3, **characterized in that** the light beamers (4A) and (4B) are fed via an intermediate fastening ring (B) positioned in-between the camera (1) and the lens (2) or via the flash shoe of the camera (1), and linked via electric wires (9A) and (9B) to light sources (6A) and (6B) of the light beamers (4A) and (4B).

5. The device as defined in any of the claims 1 to 4, **characterized in that** extinguishing the lights of the beamers (4A) and (4B) during picture acquisition is performed via the analysis of a signal received from the intermediate fastening ring (B) positioned in-between the camera (1) and the lens (2) or received from the flash shoe of the camera (1) and transmitted to the light sources (6A) and (6B) of the light beamers (4A) and (4B).

6. The device as defined in any of the claims 1 to 5, **characterized in that** a push-button (P) enables to switch on the lights of the beamers (4A) and (4B) via signals (10A) and (10B).

7. The device as defined in any of the claims 1 to 6, **characterized in that** it comprises a two-stage push button (P) such that a first level of pressure is switching on the lights of the beamers (4A) and (4B) and that the lights of the beamers (4A) and (4B) extinguish and the picture acquisition by the camera (1) is triggered when the two-stage push button (P) is further depressed.

8. The device as defined in claim 7, **characterized in that** the two-stage push button (P) is the triggering push button of the camera itself.

9. The device as defined in any of the claims 1 to 8, **characterized in that** a photosensitive cell activated by the triggering of the flash of the camera (1) controls the extinguishing of the lights of the beamers (4A) and (4B) during the picture taking.

10. The device as defined in any of the claims 1 to 9, **characterized in that** the device body is equipped with more than two light beamers in order to acquire pictures at multiple fixed distances.

11. A method of use of a device to render reproducible the picture acquisition as defined in any of the claims 1 to 10 **characterized in that**:
- a case comprising at least two light beamers is fixed to a camera (100), then
- the lights of the beamers (200) is activated, then
- the user defines alternatively a distance to a subject by superposing light spots of the light beamers (300) and a centering of the light spots on the subject (400);
- picture acquisition (500) is triggered by the user;
- A system for automatically extinguishing the light beamers (600) is triggered at the same time as user triggers the picture acquisition (700) so that the light beamers are kept switched on prior to the triggering of the camera, then the light beamers extinguish at the same time as the triggering of the camera and the lights of the beamers remain extinguished during the image recording process by the photosensitive surface of the camera, and finally the light of the beamers are switched on again when the image recording process by the photosensitive surface of the camera is complete.
